Europäisches Patentamt

European Patent Office

Office européen des brevets

(19)

(11) Numéro de publication: **0 399 887**
**A1**

(12) **DEMANDE DE BREVET EUROPEEN**

(21) Numéro de dépôt: 90401344.8

(51) Int. Cl.⁵: **G05B 19/10**

(22) Date de dépôt: 21.05.90

(30) Priorité: 24.05.89 FR 8906808

(43) Date de publication de la demande:
28.11.90 Bulletin 90/48

(84) Etats contractants désignés:
**DE GB NL**

(71) Demandeur: **GENERAL ELECTRIC CGR S.A.**
**100, rue Camille-Desmoulins**
**F-92130 Issy les Moulineaux(FR)**

(72) Inventeur: **Thieser, Jean**
**Cabinet Ballot-Schmit, 7 rue le Sueur**
**F-75116 Paris(FR)**

(74) Mandataire: **Ballot, Paul Denis Jacques et al**
**Cabinet Ballot-Schmit 7, rue le Sueur**
**F-75116 Paris(FR)**

(54) **Système de réglage d'un paramètre.**

(57) L'invention concerne les systèmes de réglage d'un paramètre P à l'aide d'une commande manuelle 10.

L'invention réside dans le fait que la variation $\delta P$ du paramètre P est proportionnelle à la variation $\delta x$ de la commande par unité de temps $\delta t$ si $-\sqrt{b} \leq \delta x \leq +\sqrt{b}$ et est donnée par :

$\delta P = c.\delta x + a/b.\delta^2 x.signe$ de $\delta x$

si $\delta^2 x > b$

Les opérations de comparaison sont réalisées par le circuit de seuil 14 tandis que les opérations de multiplication sont effectuées par les circuits 13,15 et 16.

L'invention est applicable aux systèmes de déplacement d'un repère à l'aide d'une "souris".

FIG.1

EP 0 399 887 A1

## SYSTEME DE REGLAGE D'UN PARAMETRE

L'invention concerne les systèmes qui permettent de régler la valeur d'un paramètre, telle que la longueur du déplacement d'un repère sur un écran d'un tube cathodique, en fonction de la position de la commande constituée par une manette à molette ou une "souris" ou un manche à balai.

Pour régler un paramètre P dans un système électronique, par exemple le volume d'un poste radio, il est habituel d'utiliser un bouton de commande que l'on manipule pour amener ce paramètre à la valeur souhaitée, valeur qui peut être affichée sur un cadran d'un appareil de mesure, sur l'écran d'un tube cathodique d'un oscilloscope. C'est ainsi qu'il est connu d'utiliser une "souris", associée à un clavier de commande d'un ordinateur, pour déplacer un repère, telle qu'une flèche, sur l'écran de visualisation et l'amener à l'endroit choisi. Dans ce cas, le déplacement x de la souris sur une surface plane a pour effet de déplacer le repère sur l'écran d'une longueur k.x proportionnelle à celle du déplacement de la souris. En conséquence, lorsque le repère doit traverser tout l'écran, il faut déplacer d'autant la souris lorsque le coefficient de proportionalité est égal à l'unité. Parfois, lorsque la surface de déplacement de la souris est limitée ou lorsque la souris dérape, il faut soulever la souris pour la ramener à un endroit de la surface plane qui permette de reprendre le mouvement dans la direction désirée.

Par ailleurs, il est parfois nécessaire de régler la position du repère, et plus généralement la valeur d'un paramètre, de manière précise, ce qui impliquerait un déplacement important de la souris pour une faible variation du paramètre (k inférieur à l'unité). Il faut aussi faire varier rapidement ce paramètre pour l'amener à une valeur très différente de la précédente, ce qui supposerait un coefficient de proportionalité k très supérieur à l'unité de manière à ne pas avoir à déplacer la souris sur une grande longueur.

Le but de la présente invention est alors un système de réglage d'un paramètre qui permette un réglage fin dudit paramètre ainsi qu'une variation importante pour un déplacement limité de la commande de réglage.

Le but de la présente invention est atteint en mettant en oeuvre un système de réglage qui dépend à la fois du déplacement de la commande de réglage et de la vitesse dudit déplacement.

Plus précisément, à basse vitesse, la variation du paramètre est proportionnelle au déplacement et à vitesse plus élevée, la variation du paramètre est proportionnelle au déplacement par un coefficient qui croît. avec la vitesse. Ainsi, le réglage précis est obtenu en tournant lentement le bouton de la commande ou en déplaçant lentement la souris. La variation ample est obtenue en tournant rapidement le bouton ou en déplaçant rapidement la souris.

L'invention se rapporte à un système de réglage d'un paramètre P en fonction du déplacement x d'un dispositif de commande caractérisé en ce qu'il comprend :

- des premiers moyens pour mesurer à intervalles réguliers $\delta t$ la variation $\delta x$ du déplacement x, et

- des deuxièmes moyens pour réaliser une variation $\delta P$ dudit paramètre P telle que cette variation $\delta P$ est d'une part, proportionnelle à la variation $\delta x$ du déplacement x lorsque cette variation $\delta x$ est, en valeur absolue, inférieure ou égale à un certain seuil $\sqrt{b}$ et, d'autre part, qu'elle est une fonction d'un polynôme de degré n supérieur à 1 lorsque cette variation $\delta x$ est, en valeur absolue, supérieure audit seuil $\sqrt{b}$.

Dans les cas habituels, le polynôme sera de degré deux tel que :

$$\delta P = c.\delta x + a/b\ \delta^2 x.\text{signe de } \delta x,$$

a,b et c étant des coefficients ajustables.

Les deuxièmes moyens peuvent être réalisés par :

- un premier circuit multiplicateur pour multiplier la variation $\delta x$ du déplacement x par le coefficient ajustable c,

- un circuit pour calculer $a/b.\delta^2 x$,

- un circuit comparateur pour comparer la variation $\delta x$ du déplacement x à des valeurs de seuil définis par le coefficient ajustable b et pour fournir des coefficients multiplicateurs

- de valeur zéro si $-\sqrt{b} \leq \delta x \leq +\sqrt{b}$

- de valeur -1 si $\delta x < -\sqrt{b}$

- de valeur +1 si $\delta x > +\sqrt{b}$,

- un deuxième circuit multiplicateur pour multiplier $a/b.\delta^2 x$ par l'un des coefficients multiplicateurs fournis par le circuit comparateur, et

- un circuit additionneur pour additionner les signaux fournis par les premier et deuxième circuits multiplicateurs.

D'autres caractéristiques et avantages de la présente invention apparaîtront à la lecture de la description suivante d'un exemple particulier de réalisation, ladite description étant faite en relation avec le dessin joint dans lequel :

- la figure 1 est un schéma fonctionnel d'un exemple particulier de réalisation d'un système de réglage d'un paramètre selon la présente invention, et

- la figure 2 est un diagramme qui montre une courbe d'asservissement qui peut être obtenue en mettant en oeuvre l'invention.

Dans la plupart des systèmes de réglage d'un paramètre P qui sont actuellement utilisés, la variation $\delta x$ angulaire (bouton rotatif ou manette à molette) ou linéaire (souris) de la commande fait varier le paramètre P de $\delta x$ ou de $k.\delta x$, telle que :

$P = Po + k.\delta x$

dans laquelle k est un coefficient de proportionalité et Po la valeur de P avant la variation.

Comme on l'a signalé dans le préambule, lorsqu'un tel système est précis, c'est-à-dire qu'il permet d'obtenir des variations faibles de P, les grandes variations de P nécessitent des déplacements importants du bouton ou de la souris.

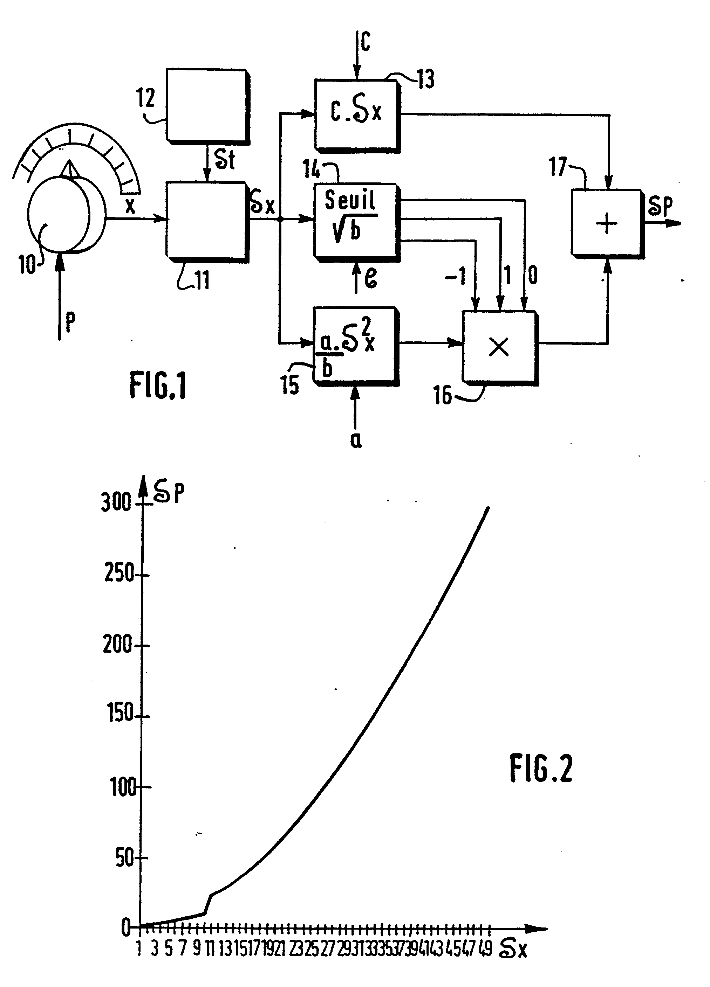

L'invention propose de faire varier le coefficient k non seulement en fonction de $\delta x$ mais aussi en fonction de la vitesse de variation de $\delta x$. La figure 1 est un schéma fonctionnel d'un exemple particulier de réalisation d'un système de réglage qui permet d'obtenir une variation du coefficient k en fonction de $\delta x$ et de la vitesse de variation de $\delta x$.

Ce système comprend un dispositif manuel de commande 10 de la variable P, tel qu'un bouton rotatif ou une souris, qui fournit un signal électrique x proportionnel au déplacement angulaire du bouton ou au déplacement linéaire de la souris. Ce signal x est appliqué à un circuit 11 qui reçoit des impulsions de période $\delta t$ fournies par un circuit horloge 12. Ce circuit 11 est prévu pour fournir, à intervalles réguliers $\delta t$, un signal $\delta x$ qui est proportionnel au déplacement du bouton ou de la souris 10 entre deux impulsions consécutives. Ce signal est positif ou négatif selon que le bouton ou la souris a été déplacée dans un sens ou.dans l'autre par rapport à la position atteinte lors de l'intervalle précédent.

Il en résulte que $\delta x$ est proportionnel à la distance parcourue entre deux impulsions d'échantillonage et que $\delta x/\delta t$ est proportionnel à la vitesse de la souris. Comme $\delta t$ est une constante, la vitesse est donc proportionnelle à $\delta x$. Le signal $\delta x$ est appliqué simultanément à trois circuits 13,14 et 15. Le circuit 13 effectue une multiplication par un coefficient c dont la valeur dépend de la précision que l'on souhaite obtenir pour les déplacements de faible amplitude.

Le circuit 14 est un circuit comparateur qui compare $\delta x$ à deux seuils, l'un positif $+\sqrt{b}$ et l'autre négatif $-\sqrt{b}$. Ce circuit 14 fournit alors sur ces trois bornes de sortie les coefficients multiplicateurs suivants :

0 si $-\sqrt{b} \leq \delta x \leq = \sqrt{b}$

1 si $\delta x > +\sqrt{b}$

-1 si $\delta x < -\sqrt{b}$

Le circuit 15 effectue le calcul du carré $\delta^2 x$ et une multiplication de ce dernier par un coefficient a/b dont la valeur dépend du poids que l'on veut donner à la variation $\delta^2 x$.

Les trois coefficients 0,1 ou -1 sont appliqués à un circuit multiplicateur 16 auquel est appliqué par ailleurs le signal $a/b.\delta^2 x$ fourni par le circuit 15. Ce circuit 16 effectue la multiplication de $a/b.\delta^2 x$ par l'un des coefficients multiplicateurs 0,1 ou -1.

Les signaux de sortie des circuits 13 et 16 sont appliqués à un circuit d'addition 17 qui fournit un signal $\delta P$ de variation du paramètre P.

En d'autres mots, le système de réglage de la figure 1 réalise la fonction suivante (1) :

$\delta P = c.\delta x$ si $\delta^2 x \leq b$

$\delta P = c.\delta x + a/b.\delta^2 x.$signe de $\delta x$ si $\delta^2 x > b$

Les valeurs de a, b et c peuvent être choisies de la façon suivante :

- c est le pas minimum de variation que l'on veut obtenir;

- b est choisi de façon à être légèrement supérieur aux carrés des valeurs de $\delta x$ obtenues lors d'une utilisation "normale" du bouton de commande ou de la souris;

- a est un coefficient multiplicateur qui permet d'obtenir des variations importantes de $\delta P$.

Le circuit de la figure 1 peut être simplifie si l'on ne tient compte que de la partie entière de $\delta x$, cette valeur $\delta x$ étant bornée. On peut alors définir, à l'aide de la formule (1), une table des valeurs de $\delta P$ pour toutes les valeurs de $\delta x$. Cette table est enregistrée dans une mémoire qui est adressée par la valeur $\delta x$ ramenée à sa valeur entière.

La fonction définie par la formule (1) peut être généralisée à des puissances de $\delta x$ supérieures à deux. On obtiendrait alors la formule suivante (2) :

3

$$\delta P = \sum_{i=1}^{n} (a_{2n}.\text{signe de } \delta x).(\delta x^{2n}/b_{2n}) + \delta x^{2n-1}/b_{2n-1}$$

La formule (1) correspondrait alors à faire $n = 1$ dans la formule (2).

La figure 2 est une courbe montrant la variation de $\delta P$ en fonction de $\delta x$ dans le cas où :

a = 10

b = 100

c = 1

Cette courbe montre que la courbe est linéaire pour $\delta x \leq 10$, c'est-à-dire $\delta^2 x \leq 100$ et qu'elle est parabolique pour $\delta x > 10$.

L'invention a été décrite en utilisant un circuit du type de celui décrit en relation avec la figure 1 mais il est clair qu'elle peut être mise en oeuvre par un calcul numérique simple réalisé par un microprocesseur. Ainsi, dans le cas d'une souris associée à un clavier d'ordinateur, les informations de déplacement fournies par la souris suivant deux axes orthogonaux sont traitées par un microprocesseur qui déterminent le sens du déplacement et son amplitude. On comprend alors que le système de réglage de l'invention peut être réalisé par le même microprocesseur en ajoutant quelques instructions supplémentaires

## Revendications

1. Système de réglage d'un paramètre P en fonction du déplacement x d'un dispositif de commande (10) caractérisé en ce qu'il comprend :
- des premiers moyens (11,12) pour mesurer à intervalles réguliers $\delta t$ la variation $\delta x$ du déplacement x, et
- des deuxièmes moyens (13 à 17) pour réaliser une variation $\delta P$ du paramètre P qui est, d'une part, proportionnelle à la variation $\delta x$ du déplacement x lorsque cette variation x, en valeur absolue, est inférieure ou égale à un certain seuil ($\sqrt{b}$) et qui est, d'autre part, une fonction d'un polynôme de degré n supérieur à 1 lorsque cette variation $\delta x$, en valeur absolue, est supérieure audit seuil ($\sqrt{b}$).

2. Système de réglage selon la revendication 1, caractérisé en ce que le polynôme est de degré deux tel que :

$\delta P = c.\delta x + a/b \, \delta^2 x.\text{signe de } \delta x$

lorsque la variation $\delta x$ est, en valeur absolue, supérieure à $\sqrt{b}$, la variation du paramètre $\delta P$ étant égale à $c.\delta x$ lorsque la variation $\delta x$ est, en valeur absolue, inférieure à $\sqrt{b}$ a,b, et c étant des coefficients ajustables.

3. Système de réglage selon la revendication 2, caractérisé en ce que les deuxièmes moyens comprennent :
- un premier circuit multiplicateur (13) pour multiplier la variation $\delta x$ du déplacement x par le coefficient ajustable c,
- un circuit (15) pour calculer $a/b.\delta^2 x$,
- un circuit comparateur (14) pour comparer la variation $\delta x$ du déplacement x à des valeurs de seuil définis par le coefficient ajustable b et pour fournir des coefficients multiplicateurs
- de valeur zéro si $-\sqrt{b} \leq \delta x < +\sqrt{b}$
- de valeur -1 si $\delta x < -\sqrt{b}$
- de valeur +1 si $\delta x > +\sqrt{b}$
- un deuxième circuit multiplicateur (16) pour multiplier $a/b.\delta^2 x$ par l'un des coefficients multiplicateurs fournis par le circuit comparateur (14), et
- un circuit additionneur (17) pour additionner les signaux fournis par les premier et deuxième circuits multiplicateurs (13,16).

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-3630843 (SIEMENS A.G.)<br>* le document en entier *<br>--- | 1 | G05B19/10 |
| A | US-A-4203063 (LOEB ET AL)<br>* colonnes 1 - 2; figure 1 *<br>--- | 2, 3 | |
| A | US-A-4749878 (SNYDER ET AL)<br>* colonnes 2 - 3 *<br>----- | 2, 3 | |

DOMAINES TECHNIQUES RECHERCHES (Int. Cl.5 )

G05B

Le présent rapport a été établi pour toutes les revendications

| Lieu de la recherche | Date d'achèvement de la recherche | Examinateur |
|---|---|---|
| LA HAYE | 30 JUILLET 1990 | MOYLE J.F. |

EPO FORM 1503 03.82 (P0402)